# EUROPEAN PATENT APPLICATION

(11) **EP 4 802 874 A1**
(43) Date of publication of application: **09.09.2026**
(21) Application number: 25161346.9
(22) Date of filing: 03.03.2025
(51) Int. Cl.: A01C 23/00

(54) **AN AGRICULTURAL DEVICE HAVING A VARIABLE WORKING WIDTH FOR DISTRIBUTING A PUMPABLE MEDIUM AND A METHOD FOR VARYING A WIDTH OF PUMPABLE MEDIUM DISTRIBUTION**

(71) Applicant: Samson Agro A/S, 8800 Viborg (DK)
(72) Inventor: Jensen, Søren Mejlstrup, 8800 Viborg (DK); Larsen, Erland Ørum, 8800 Viborg (DK); Thomsen, Carsten Nørlund, 8800 Viborg (DK); Agger, Torben Bank, 8800 Viborg (DK); Madsen, Carl Christian, 8800 Viborg (DK)
(74) Representative: Patrade A/S

(57) **Abstract**

An agricultural device (10) for distributing a pumpable medium, wherein the agricultural device (10) comprises:
- a first frame (30) configured to extend along a first axis (31) in a working position (6);
- at least one second frame (40a,40b) configured to extend along a second axis (41a,41b) in a working position (6); and
- a plurality of applicators (11) configured to distribute the pumpable medium to soil and to be arranged on the first and second frame (30,40a,40b),

wherein the agricultural device (10) is configured to be connected to a vehicle (1) and wherein a direction of travel (2) of the agricultural device (10) is substantially perpendicular to the first and second axis (31,41a,41b),
wherein the first frame (30) is displaced from the at least one second frame (40a,40b) relative to the direction of travel (2) and wherein at least a part of the second frame (40a,40b) extend beyond a span of the first frame (30) along the second axis (41a,41b).

## Description

### Field of the Invention

The present invention relates to an agricultural device for distributing pumpable medium over agricultural land. Furthermore, the invention relates to a method of adjusting the working width of an agricultural device for distributing pumpable medium.

### Background of the Invention

In the present day it is common for different farmers to use different tramline spacing, where these spacings are often linked to the size of the farms and fields. Large spacings between tramlines are usually seen in large fields, whereas small fields are usually constrained to use smaller spacings between tramlines. This variety of tramlines give rise to challenges for contractors who serve several farms as they must be able to support variety of different tramline spacings. This is mainly because the machinery used is often very limited in their working widths and thereby the contractors need a lot of different machines to be able to support farms of different sizes.

In the context described above, machinery could be agricultural devices such as a slurry spreader or a manure spreader.

The need for machinery with a large variety of working widths also give complex requirements back to the manufacturer who must provide machinery in many variants to fit customer needs. Today, booms or spreader arms or frames on these types of machines are normally equipped with several mechanical articulations to fit these different tramline spacings making it possible to support 3 or maybe 4 different working widths. However, the customer must decide specifically which working width is needed when ordering the boom. The manufacturer will then build a unique boom for these specific requirements. Thus, there is a need for a better solution for machinery being able to support a wider range of working widths.

Here tramline spacing refers to the distance between parallel tracks or groves designed for agricultural machinery to drive in.

One solution to this issue is described in the prior art of patent EP3939426. EP3939426 discloses a spreader arm that can vary its working width by a continuously variable slidable portion within an arm frame. This way, the spreader arm can arrange medium outlets along one axis in a folded-out position. Additionally, the medium arms can rotate from the arm into working position about the longitudinal axis relative to the spreader arms. However, the spreader arm disclosed in EP3939426 could be unstable in cases of maximum working width, especially when the connected vehicle has a low weight, as when the pumpable medium supply is low. Additionally, the spreader arm is not configured to have its outlets at a constant spacing which could make a uniform distribution of pumpable medium difficult, especially in sections where outlets overlap between the two rows of outlets. On top of that, the spreader arm is not constructed to support other outlets, such as a trailing shoe, due to its lack of more rigid support at the outlets' working position. The concept with having the hoses folding on each side of the main wing also prevents the possibility to apply pressure and still being able to follow the soil surface. Other outlets, such as trailing shoes, could also cause issues, such as collision, when in transport position. Thus, there is a need for an alternative solution. The advantage by a trailing shoe is that it can break the crust on the soil surface and hereby reducing the infiltration time for the slurry to be absorbed into the soil. The infiltration time is important as surface exposed slurry have a high loss of NH4-N which has a negative effect on the field yield and environment. However, proper infiltration requires a certain pressure on the trailing shoe in order to break the crust in the area a pressure of 0-15kg depending on the crust resistance.

Another solution is presented in the prior art of German utility patent DE202019105922U1. DE202019105922U1 discloses a boom that is rotational in several axes to ensure flexibility and thereby an effective conformance to the contour of the surface. However, the boom disclosed does not have an effective method of adjusting the working width and thus again there is a need for an alternative solution. Additionally, it also only works with two working sections, which makes it difficult to follow the soil surface in hilly conditions at large working widths. The two sections concept also have the disadvantage that the vertical movements of the sections have an effect on the distance between the two sections in the middle of the boom, hereby affecting the application rate in this specific area giving bad growing conditions for the crop, with reduced yield or crop quality as a consequence. This is also challenging for slurry application on large crops which are grown in fixed row spacing, as for example maize, which is preferably sown with a spacing of 75 cm.

### Object of the Invention

One objective of the present disclosure is to achieve an agricultural device with a variable working width enabling the agricultural device capable of serving farms and fields with a wider range of tramline spacings. A further objective is to make an agricultural device where only one of such devices is required to serve farms and fields with a wider range of tramline spacings.

### Description of the Invention

One objective of the invention is achieved by an agricultural device for distributing a pumpable medium that comprises:
- a first frame configured to extend along a first axis in a working position,
- at least one second frame configured to extend along a second axis in the working position and,
- a plurality of applicators configured to distribute the pumpable medium to soil and to be arranged on the first and second frames.

The agricultural device is configured to be connected to a vehicle and a direction of travel of the agricultural device is substantially perpendicular to the first and second frame axes. The first frame is displaced from at least one second frame relative to the direction of travel and wherein at least a part of the second frame extends beyond the span of the first frame along the second axis.

One purpose of the agricultural device is to distribute a pumpable medium over a field. As the agricultural device moves across a field, the first and second frames will be displaced in a variety of different directions over the span of the first frame and the second frame. A skilled person would know the displacement of the first and second frames can be caused by different sources. The displacement of the first frame and the second frame can in some cases cause collision between the spaced apart applicators arranged on the first frame and the second frame. An advantage of displacing the first frame from the second frame relative to the direction of travel is that the collision caused by the displacement of the frames is avoided and so is the damage caused by this collision.

In one embodiment of the agricultural device, the at least one second frame is fully extended beyond the span of the first frame, and there is no overlap between the first frame and the at least one second frame. In this working configuration, the agricultural device will have a maximum working width, and thereby this working configuration will be the most efficient as the agricultural device can apply pumpable medium to the greatest area and thereby fewer runs necessary to cover a field completely. However, the agricultural device can only be efficient if the field has a tramline spacing enabling this maximum working width.

The working width of the agricultural device comprising one displaceable second frame are measured from the centre of the first frame to the end of the second frame furthest from the first frame. In the case where two displaceable second frames are arranged on the agricultural device; the working width is mirrored to each side of the first frame.

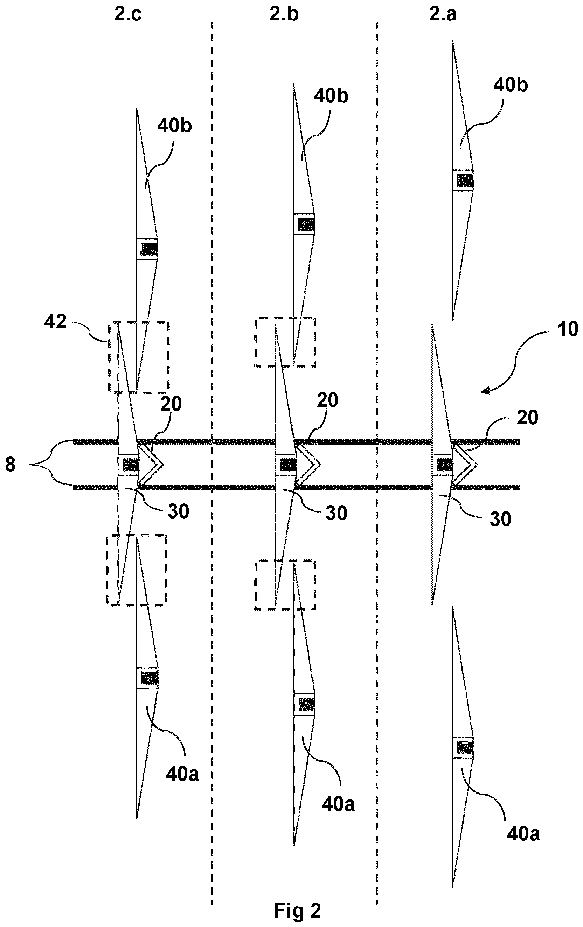

In another embodiment of the agricultural device, only part of the second frame extends beyond the span of the first frame and thereby forms an overlap of the applicators between the first and the at least one second frame. A variety of configurations of overlap between the first and two second frames is illustrated in figures 2.a, 2.b and 2.c, however the present invention is not limited to these arrangements. The advantage of this frame overlap is that the working width of the agricultural device can be customized for a specific tramline spacing of the field, and thereby one agricultural device can efficiently deliver pumpable medium to a wide variety of tramline spacings. Another advantage is that within one field, there can be a variety of tramline spacings, and the agricultural device of the present invention will be able to service a variety of tramline spacing. Thus, the working width can be changed on the field, either manually or with another mechanism.

When in use, the agricultural device moves along the field and in the direction of travel. While the agricultural device is moving, the agricultural device will distribute pumpable medium on or in the soil, depending on the specific applicator used. The agricultural device distributes pumpable medium substantially homogenously over the span of the first frame and the second frame in their working position. The distribution may be challenging as fields are mostly naturally formed, i.e. usually not flat, and many fields have to some degree a contoured landscape. This challenge increases proportionally to the working width. Large working widths therefore require better capabilities to follow the landscape. Therefore, most farming machines must be able to adapt to field contour to at least some degree for optimal efficiency. The first frame and the second frame may be displaceable to follow the contour of the field. This will make the first frame and second frame efficient in following the contoured landscape of entire field and thereby more effective in distribute the pumpable medium over the span of the agricultural device.

Due to the substantial weight of farming vehicles, the soil beneath their wheels can become compacted and thereby negatively impact crop growth. Thus, fields often have tramlines which are specific lanes for farming vehicles to drive along. Tramlines separate crop zones and traffic and thereby farmers can make the most out of their fields. In general, fields will be designed to have as few tramlines as possible to gain maximum yield of the field. Thus, farming equipment, such as the agricultural device, strives to get as wide a working width as possible. However, due to geometry and different sizes of fields, the spacing between tramlines can vary even within the same field.

By having an overlapping of the frames, where the second frame is overlapping with the centered first frame, might also increase the centre of mass of the whole agricultural device. This will increase overall stability of agricultural device during use when maximum working width is not needed.

Having at least two separate frames being able to overlap make it easier for the frames to adjust their angle to the topography of the soil. This may ensure a more uniform distribution, even on highly contoured soil. Furthermore, separating the working section into smaller displaceable frames will improve the application rate in the area between two frames, compared to for example the invention of DE202019105922U1.

The agricultural device may be used to spread the pumpable medium over a piece of agricultural land, such as a field, however the agricultural device could be used on other types of land as well that is suitable for spreading/distributing pumpable medium.

The term pumpable medium is a general term; however, examples of pumpable medium could be mediums such as slurry or manure. A pumpable medium would normally have a dry matter content below 12%, but the pumpable medium is not limited to this specific range.

In one aspect, the first frame and the second frame may be provided with at least one distribution device, preferably one on each frame. This distribution device is supplied with pumpable medium through at least one central line and has a plurality of applicator supply lines. The distribution device ensures an even distribution of pumpable medium to a plurality of applicators. This distribution device helps achieve an even distribution of pumpable medium along the span of the agricultural device.

As the central line and applicator supply lines relate to the distribution of medium such as slurry, the one or more lines may be configured for transportation of non-homogeneous mediums such as slurry or manure.

Another important factor that has begun to play a big role in farming is the process of farming's impact on the environment. More and more businesses, including farming, have to reduce their negative impact on the environment due to stricter national regulations. Furthermore, there is a high likelihood of these regulations becoming stricter in the near future. Therefore, it is important for farmers to also take the environmental impact into consideration when acquiring new agricultural devices.

The applicators may be arranged on the first and second frame in connection with at least one spring support. This spring support would increase the stability of the applicators when in use and give the applicators a spring force when in contact with the soil. This spring support could ensure that the applicators have the force to be able to dig into the soil to a certain depth for delivering the pumpable medium. Another advantage could be a better local conformity to the topography of the soil with the counter force from the spring support. Furthermore, the ability to better put the pumpable medium into the soil reduces the impact of the medium on the environment.

Another advantage of having the first frame being displaced from the second frame relative to the direction of travel is that it is possible to attach spring support to the frame and still be capable of having an overlap between the first frame and the second frame. If the frames were not displaced, it would not be possible to use spring support as they would collide when trying to overlap. The invention of EP3939426 would not be compatible with spring support, due to the compacted space of the invention of EP3939426 when in transport position, missing structural support for spring supports at the outlet and how the spring support rotates into the working position.

In addition, the force that the applicators exert onto the soil may also be actively regulated by a computer-implemented system. This could guarantee that enough force is applied to the applicators for contact with the soil, and thereby a better placement of the applicators in or on the soil, thus enhancing pumpable medium distribution.

In another aspect, the vehicle, which the agricultural device is connected to, may be a slurry tank or could be a tractor with an internal or external supply of pumpable medium.

The agricultural device may further comprise hoses or pipes which work as a conduit to lead the pumpable medium from the vehicle to the applicators.

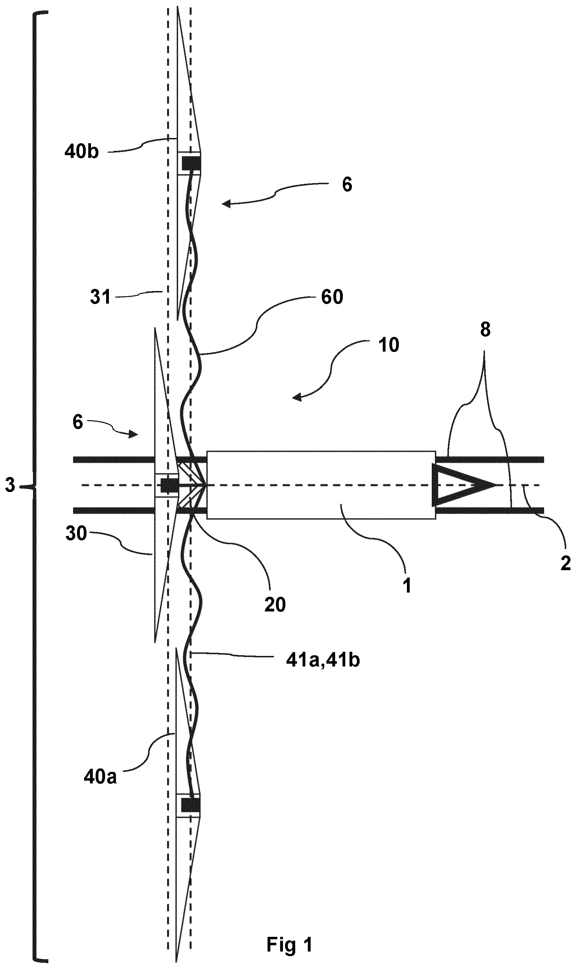

The agricultural device may be self-propelled or not self-propelled. In an embodiment, the agricultural device may thus need to be dragged along the field. Generally, the agricultural device may be coupled to a vehicle, such as a slurry tank. The vehicle may then be dragged by for example a motorized vehicle, such as a tractor, along a direction of travel. The first frame of the agricultural device may be arranged substantially symmetrically centred behind the vehicle, and when in a working position, perpendicular to the direction of travel. Furthermore, the agricultural device has at least one second frame that is displaced from the first frame along the direction of travel, and thereby extends along a different axis but also perpendicular to the direction of travel. Each of the frames will be arranged with a plurality of applicators from where the pumpable medium is distributed. Fig. 1 illustrates an example of an agricultural device, the present invention is not limited to the specific embodiment disclosed in fig. 1.

In a further embodiment of the agricultural device, the agricultural device may have at least one second frame that is configured to be displaceable along the second axis.

With at least one second frame that is configured to be displaceable along the second axis, the agricultural device can adjust the working width by displacing the second frame according to the first frame. Thereby the agricultural device may be able to adapt to different tramline spacings and/or geometry of the field. This adaptability is achieved by an increase or decrease in the overlap between the first and second frame and thereby adjust the part of the second frame that extends beyond the first frame.

In addition, the displaceable second frame enables the agricultural device to change the working width while in the field. This could be done manually or by an electric, hydraulic, or pneumatic mechanism. Thereby, there is no need to have multiple agricultural devices with different working widths, and there would be no need to spend time on changing agricultural devices, thus, saving time.

By having the second frame being displaceable, and the working width adjustable with only one agricultural device, compared to one agricultural device for each working width, makes manufacturing of agricultural devices more efficient. Thus, less variants of agricultural devices are needed to service fields with different tramline spacings and/or field geometry. Furthermore, by having agricultural devices that can service a wider range of tramline spacings and/or field geometries, may also decrease the overall number of agricultural devices need for a farmer or contractor. This saves storage space, gives less agricultural devices that need to be maintained and better for the environment as less resources are used.

In one aspect, the displacement of the second frame, may be continuous over the span of the displacement of the second frame. However, it is preferable to have overlapping applicators between the first frame and the second frame align.

In a further embodiment of the agricultural device, the agricultural device may comprise
- a first sensor system configured to determine the displacement of the second frame; and
- a first controller configured to adjust the displacement of the second frame based on first sensor data received from the first sensor system.

When the agricultural device traverses the field, the second frame may be displaced according to a preset working width. The first sensor system determines the displacement of the second frame according to this preset working width, while the first controller adjusts based on data from the first sensor. At some point, the agricultural device reaches a point on the field where another working width is needed, this could be due to field geometry or tramline spacings. Now, the preset working width can be changed in the field as the first sensor determines that the displacement is no longer correct. The displacement will be adjusted by the first controller, and the agricultural device can continue on the field with a new working width. Thus, the working width of the agricultural device can be changed without manually changing the displacement, this is both faster and reduces the risk of injuries.

Additionally, the applicators may be displaced by disruptions or unevenness of the field, when using the agricultural device. In cases where one or more applicators may be forced to a side, due to forces from the soil, this could move the second frame. If the second frame is not moved back to its initial position, this could impact the efficiency of the spreading of pumpable medium. By having a first sensor system and first controller detecting the displacement of the second frame, the agricultural device will correct these constant displacements of the second frame due to disruptions from the soil. Thereby with the corrections from the sensor system a constant displacement of the second frame can be maintained.

Furthermore, it may also be possible to maintain a substantially constant spacing between applicators on the first frame and second frame. This will decrease the variation of the spacing between applicators during use. And ensure homogeneous spreading of pumpable medium over the span of the first frame and second frame.

By attempting to maintain a constant spacing between applicators, the agricultural device can distribute the pumpable medium more homogeneously throughout the whole working width. This may give better insight into the current state of the field related to the properties of the pumpable medium and the wanted effect. Knowing the state of the field, could lead to customizing the amount of pumpable medium needed for the next run and thereby gain optimal conditions for the soil.

Furthermore, the spacing between the applicators on the first and the second frame is preferably identical. Having a controlled constant spacing between the applicators, when the frames are overlapping, may ensure that the overlapping applicators are in line. This will result in overlapping applicators only leaving one track in the soil and thereby having less disruptive impact on the crops that may already have been sowed in the soil.

Additionally, by having a constant spacing between the applicators, could also decrease the variation in the rows, in which the pumpable medium is distributed, to a minimal. This could be highly beneficial when working within row crops.

In another aspect, the spacing between applicators vary.

In an aspect, at least one first sensor system could be arranged on the agricultural device, preferably on at least one second frame.

The first sensor system may be a pressure sensor, motion sensor, angle sensor, wire sensor, accelerometer, linear variable differential transformer, magnetic sensor, gyroscope sensor, potentiometric displacement sensor, inductive displacement sensor, IMU sensor, or a combination of sensors.

In an aspect, at least one first controller may be an adaptive controller, model predictive controller, state feedback controller, lead-lag controller, or proportional-integral-derivative controller.

In a further embodiment of the agricultural device, the displaceable second frame may be configured to attain a width of pumpable medium distribution in the range of 6 to 13.5 metres, 7.5 to 13.5 metres, 7.5 to 15 metres, 9 to 13.5 metres, 9 to 15 metres, 10.5 to 15 metres, 10.5 to 18 metres, 12 to 18 metres, or 13.5 to 18 metres, but not limited to these ranges and may span other ranges or additional ranges.

When determining the width of pumpable medium distribution for the agricultural device with one displaceable second frame, the width is measured from the centre of the first frame to the end of the second frame furthest from the first frame.

The working width and the width of pumpable medium distribution are both describing the width of the agricultural device in the working position and are used interchangeably.

By being able to displace the second frame, the agricultural device thereby gain access to a variety of working widths from one agricultural device. This increases the uses for the agricultural device as the agricultural device can distribute pumpable medium on a higher variety of fields. Thereby only one agricultural device is needed by the farmer or contractor to spread pumpable medium on fields of different sizes, which saves space and service costs.

Additionally, this increases the effectivity of manufacturing of agricultural devices as less varieties are needed. In addition, this also decreases the number of materials used during manufacturing, as the number of agricultural devices needed is reduced. Thereby, make the use of resources more efficient.

Additionally, the farmer or contractor can save time, when going from a field of one size to another field of a different size, or if one field needs various working widths. In this case, the farmer or contractor would normally need to go back to a storage/the shop to change the agricultural device. However, with an agricultural device with a varying working width this might not be necessary. Thereby, the farmer or contractor is saving time and fuel.

In one variation of the embodiment, two second frames are connected to opposite sides of the vehicle. This ensures that pumpable medium is spread on both sides of the vehicle and brings weight balance to the vehicle. This increases both stability, as the weight will be more or less the same on both sides of the vehicle, and the working width of the agricultural device.

In an aspect where two second frames are part of the agricultural device, the total working width may be in the range of 27 to 36 metres, 24 to 36 metres, 21 to 36 metres, 21 to 30 metres, 18 to 30 metres, 18 to 27 metres, 15 to 30 metres, 15 to 27 metres, or 12 to 27 metres.

The total working width of the agricultural device with two displaceable second frames may be in the following widths according to the above mentioned ranges, wherein the working width can be, but not limited to, 12 metres, 13 metres, 14 metres, 15 metres, 16 metres, 17 metres, 18 metres, 19 metres, 20 metres, 21 metres, 22 metres, 23 metres, 24 metres, 25 metres, 26 metres, 27 metres, 28 metres, 29 metres, 30 metres, 31 metres, 32 metres, 33 metres, 34 metres, 35 metres, or 36 metres.

In a further embodiment of the agricultural device, the displaceable second frame may be displaced by an extendable arm along the second axis.

With the first and the second frame being displaced in the direction of travel, it is made possible to adjust the working width to be customizable for the spacing between the tramlines on the current farm or field with just one agricultural device or at least fewer agricultural devices than earlier. Thereby avoiding the need for having multiple machines but in different working widths.

As mentioned above, while the agricultural device is moving across the field, the first frame and the second frame will be displaced in different directions caused by a variety of disruptions on the field or unevenness of the field. Furthermore, the extendable arm may also be displaceable in order to follow the contour of the land when the agricultural device moves across a field. This way, the extendable arm will improve the ability to follow the contour of the soil/field and thereby provide a more homogeneous spread of pumpable liquid over the span of the agricultural device.

The adjustment of the extendable arm and/or of the movement of the frames according to the contour of the soil, could be passive mechanisms or could be assisted actively by a computer-implemented method that is based on data from a geographical position and/or data obtained from sensors on the extendable arm and/or frames. The adjustment of the extendable arm and/or frames could also be a combination of passive and active mechanisms.

The extendable arm may be a telescopic arm. However, the extendable arm could also be hydraulic excavator arm, crane boom, or other similar examples of extendable arms, or a combination of different types of extendable arms.

In an aspect, the extendable arm may be a telescopic arm which is displaced by a cylinder, an electric actuator, an electrical or hydraulic motor.

In one aspect, the hoses between the applicators and pumpable medium supply could be attached by conventional solutions such as being integrated into the frames and/or the telescopic arm or they could run along the telescopic arm and the frame.

In an embodiment of the agricultural device, the agricultural device may comprise:
- a second sensor system configured to determine if one or more applicators arranged on the first and second frame are overlapping along the first and/or second axis; and
- a second controller configured to shut off distribution of pumpable medium of the one or more overlapping applicators based on the second sensor data received from the second sensor system.

In farming, it is important to understand the conditions of the field, which could refer to the nutrient content, pH level and moisture content in the soil. In understanding the conditions of the field, farmers could for example optimize crop growth, ensure efficient resource management, and enhance disease and pest control. Thus, the field's condition is crucial knowledge for efficiently planning when to spread the pumpable medium and the contents of the pumpable medium. One way to better control the condition of the field is to be able to actively or automatically shut-off the distribution of pumpable medium in specific applicators.

When the agricultural device is working in configurations where one or more applicators from the first and second frame overlap, the second sensor system detect when one or more applicators are overlapping and the second controller shut off one or more of the overlapping applicators. This ensures that a double dose of pumpable medium is not distributed in the tracks with overlapping applicators, which could severely impact the environment and the soil. Furthermore, by having the shut-off rely on data reduces the risk of human error and the applicators can be shut off faster. Shutting off applicators faster may furthermore create a better control of pumpable medium usage and give a better insight into the state of the soil. As the shut-off is done based on data and electrical systems, no manual labour is needed which reduces the risk of injuries and reduces the time needed compared to manually shutting off each valve.

Furthermore, data may be collected from the opening and closing of applicators and could be integrated into a computer implemented method that investigates the nutritional status of the soil. The data collected from the sensor could thereby be used for more precise nutritional status of the soil.

In one aspect, at least one applicator on the first frame or second frame is provided with an adjustable shut-off valve. Preferably all applicators are provided with an adjustable shut-off valve, with all shut-off valves being individually and separately adjustable.

In one aspect, the shutting off of one or more applicators may be done with the use of a throttle or choke valve. The valve may be arranged close to the end of the applicators as the precision of distribution is increased the closer the shut off valve is to the end of the applicator.

In one aspect, the user might be able to overwrite the system in cases where a double distribution of pumpable medium is needed in the overlapping applicators.

The second sensor system could be a hall effect sensor, optical sensor, magnetic detection sensor, or position sensitive photodiodes.

The second controller could be a programmable logic controller, distributed control systems, supervisory control and data acquisition controller, or PID controller.

In a further embodiment of the agricultural device, the first and second frame may comprise a lifting mechanism controlled by the second controller. The second controller is configured to raise the one or more overlapping applicators that are shut off by the second controller.

The agricultural device may be configured to raise overlapping applicators either on the first or the second frame. This way it is possible to avoid unnecessary wear on the applicators, when using a type of applicator that is meant to be in contact with the soil. Furthermore, the applicators would not break the soil either before or after, depending on which frame that lifts its applicators, applying the medium. Since the first frame and the second frame are displaced in the travel direction, this will make it easier to lift applicators without the risk of collision.

The lifting mechanism may be one or more linear actuators configured to raise the overlapping applicators. The agricultural device will in most embodiments only need to provide the lifting mechanism to the applications which can overlap.

The lifting mechanism may be rotary actuator configured to raise the overlapping applicators.

In one aspect, the raising of the applicators might be assisted by wires, a hinge mechanism, actuators, hydraulic or electric motors.

In an embodiment of the agricultural device, where the first frame may be configured to be foldable so that a width along the first axis is reduced in a transport position. Furthermore, the second frame is configured to be pivoted to extend substantially parallel to the direction of travel in the transport position. In addition, the second frame is initially pivoted to the transport position and subsequently the first frame is folded to the transport position.

Travelling with agricultural devices on public roads is often subject to national regulations that dictate properties such as lighting and marking, speed limits, size, and weight. Especially width can be an issue as the working width of the agricultural devices needs to be reduced due to transport between farm and field often being by public roads. The most common method of reducing the size of agricultural devices is by folding the device into a transport position. In the EU, the maximum with is 3 metres when traveling on public road without any special dispensations.

By having foldable sections on the first and second frames, the agricultural device may be able to fold into a transport configuration that conform to national regulations regarding transport on public roads. Furthermore, in the transport position, the applicators may be arranged pointing up vertically, thereby avoiding spillage of pumpable medium.

When folding large agricultural devices, it is known within the art that folding points on frames are exposed to larger forces, and these points are susceptible to wear and damage. Therefore, during designing of these agricultural devices, it is preferable with as few folding points as possible. The displaceable property of the second frame makes it possible to reach desired dimensions in transport configuration with at least two folds on each frame.

In an aspect of the frames being able to fold, they might also be removeable from the agricultural device and transported by other means, for example on a truck. This could be relevant in countries with very strict regulations of transport on public roads or on islands.

In one aspect of the agricultural device, the extendable arm may be combined with the fold on the second frame that is furthest from the first frame. This would amplify the range in which the second frame can be displaced, thereby increasing the variable working width of the agricultural device.

In a further embodiment of the agricultural device, the second frame may comprise a foldable section configured to be folded in the transport position. Thereby a length of the second frame substantially parallel to the direction of travel is reduced.

With the first frame and second frame being different, non-continuous parts is favourable compared with prior art where it is on a single frame. Being two separate frames is an advantage when folding the agricultural device as it induces less forces on the folding point.

Furthermore, with the second frame being displaceable, this may also be utilized when folding the second frame for the transport position. The second frame may be moved to the position with the least span beyond the first frame. Here the displacement extendable arm will be in its shortest form. This in turn results in less of the second frame needing to be folded to uphold national regulation. In addition, by having the foldable part of the second frame as small as possible, it exerts less force on the agricultural device when folded, thereby increasing the lifetime of the agricultural device.

Additionally, having the second frame fold up and arranged along the direction of travel when in transport position may avoid the agricultural device being too wide on the road. Furthermore, the transport position stabilizes the vehicle around the centre of mass when transported at high speed, relative to the working speed. Furthermore, the transport position increases stability and fuel efficiency of the vehicle.

In an aspect, the second frame could be either arranged on the top and/or on the side of the vehicle during transport configuration.

In an embodiment of the agricultural device, the plurality of applicators may comprise trailing shoes configured to engage with and distribute the pumpable medium to the soil.

Trailing shoes are tools that are ideal for delivering pumpable medium directly onto the soil which has been broken by the trailing shoes. However, it is a type of applicator that requires direct contact with the soil, and in general needs more support and space compared to for example a hose. The agricultural device of the present invention is compatible with applicators such as trailing shoes. As the agricultural device has a first frame on a first axis and a second frame on a second axis, this ensures space enough for trailing shoes. Thus, the agricultural device is able to use trailing shoes and still have the first frame and second frame overlap. Trailing shoes on an agricultural device that allows adjustable working width results in a high control of the distribution of pumpable medium, which in turn increases resource effectiveness and environmental sustainability.

When using trailing shoes, the agricultural device is able to distribute the pumpable medium directly into the soil. This increases the precision of delivery and is easier to control compared to pumpable medium delivered on the soil. Furthermore, this also reduces evaporation of the pumpable medium, which could lead to uncertainties between the pumpable medium delivered by the agricultural device and the pumpable medium obtained by the soil, which could disturb the expected nutrition in the soil. Additionally, evaporation of pumpable medium could be environmentally harmful.

In an aspect, the agricultural device could include an installed flowmeter, arranged internally or externally on the extendable arm or applicators. The flowmeter makes sure that the correct amount of pumpable medium is distributed in the soil.

In a further aspect, the flowmeter may be linked up with data and a position making it possible for a system to determine how much pumpable medium is needed on each location of the farm/field. Thus, making an automatic system for guaranteeing the correct amount of pumpable medium delivered when considering the condition of the field.

In a further aspect, when distribution of the pumpable medium is not needed directly into the soil, the outlet of the applicators may be a hose instead of a trailing shoe.

In an embodiment of the agricultural device, the agricultural device might comprise at least two second frames.

Generally, agricultural devices are able to spread pumpable medium on both sides of a vehicle. This ensures stability and balance of the agricultural device, while also increasing the working width. Thus, the agricultural device of this invention comprises at least two second frames that are arranged on opposite sides of the first frame.

In an aspect, the agricultural device is able to comprise two or more second frames. The preferable number is two. However, in cases of more than two second frames, it is preferably an even number of second frames that are distributed evenly on opposite sides of the first frame.

Furthermore, an increased number of second frames could increase the working width of the agricultural device. Increasing the working width results in a bigger area covered with pumpable medium during use. This may reduce time needed to cover a field, reduce the number of runs back and forth in the field, reduce the number of tramlines in the field and may reduce the fuel consumption of the vehicle thereby have a positive impact on time and the environment.

In an aspect, an increased number of second frames could also be with the same working width but divided into smaller second frames. By having the same working width distributed over a set of smaller second frames could lead to a better soil connection of the applicators and better conformity to the topography of the soil. An increased number of second frames with the same working width will result in a more homogeneous distribution of pumpable medium and could be beneficial for fields with a varying contour.

A further objective of the invention is achieved by a method for varying a width of pumpable medium distribution, wherein the method comprises steps of:
- providing an agricultural device comprising a first frame and at least one second frame Furthermore, the first frame is displaced from the at least one second frame relative to a direction of travel, the direction of travel being substantially perpendicular to the first frame and the second frame.
- adjusting a width of the agricultural device (10) by displacing the at least one second frame.

When the agricultural device adjusts the width of pumpable medium distribution, it displaces the second frame along a direction that is perpendicular to the width of the pumpable medium distribution. When the second frame is displaced to extend further beyond the first frame, the width of pumpable medium distribution is increased. If the second frame is displaced to extend less beyond the first frame, the width of pumpable medium distribution is decreased. By being able to adjust the width of pumpable medium distribution, the agricultural device is able to distribute pumpable medium to various fields with different tramline spacing and/or field geometries.

In one variation of the embodiment, the frames have spaced apart applicators over the length of the first frame and/or second frame. These applicators distribute the pumpable medium into or onto the soil. As the first frame and second frame are displaced relative to the direction of travel, no collision between applicators of the first frame and the second frame will happen when the second frame is displaced with an overlap with the first frame.

When being able to displace the second frame relative to the first frame, the agricultural device may be able to adjust its working width continuously. This can be effective in cases where the field is not a complete square. If, for example, at the end of the field, when one frame is moving along the edge, the edge of the field starts encroaching in the working width, the agricultural device could be able to adjust its working width as the agricultural device is distributing the pumpable medium to the soil, thereby minimizing pumpable medium being distributed outside the field. As the adjustment of working width happens while spreading pumpable medium, this may also save time.

In one aspect of the method, adjustment of the at least one second frame is arranged so that a part of the second frame may extend beyond the span of the first frame in the direction perpendicular to the direction of travel. One advantage of the method is that the working width is able to be adjusted into a variety of working widths.

In a further embodiment of the method, wherein the method may comprise further steps of:
- setting a setpoint for the displacement of the second frame,
- adjusting the displacement of the second frame based on the setpoint of the displacement of the second frame.

When the agricultural device is moving across the field, it may have been set to a certain setpoint related to a width of pumpable medium distribution, which is directly linked to a certain displacement of the second frame. While moving across the field this displacement may be constantly monitored and in cases of displacement outside the setpoint, the displacement will be adjusted back to the setpoint.

The method also corrects the displacement of the second frame, when a new width of pumpable medium distribution is desired. By changing the setpoint, the displacement of the second frame will be determined to not be correct according to the setpoint. The method will then adjust the displacement into the correct displacement according to the setpoint. This both saves time and reduces risk of injury compared to adjusting the displacement manually.

The method may secure a maintained displacement of the second frame. By having this maintained displacement of the second frame, the agricultural device can distribute the pumpable medium more homogeneously over the span of the first frame and second frame. A more homogeneous distribution may give a more detailed insight into the current state of the field related to the properties of the pumpable medium and the wanted effect. Knowing the state of the field makes it possible to customize the amount of pumpable medium needed for the next run to gain optimal conditions for the soil.

In an aspect of the method, there may be a determining step in the method. The determining step can either be before or after setting the setpoint. In the determining step, the displacement of the second frame is determined. The step of determining may be performed by using sensors.

In a further embodiment of the method, wherein the method could comprise further steps of:
- determining if one or more applicators arranged on the first frame configured to distribute the pumpable medium to soil are overlapping with one or more applicators arranged on the second frame,
- terminating supply of pumpable medium to the one or more overlapping applicators arranged on the first or second frame.

The method applies when the agricultural device displaces the second frame. When the second frame is displaced, one or more applicators may overlap due to the frames overlapping to decrease the width of pumpable medium distribution. The one or more overlapping applicators will then have their supply of pumpable medium terminated on the first or second frame.

The ability to shut off overlapping applicators ensures that a double dose of pumpable medium is not distributed in the tracks by overlapping applicators, which could severely impact the environment and the soil. Furthermore, by having the shut-off rely on data reduces the risk of human error, and the applicators can be shut off faster, creating better control of the usage of pumpable medium and insight into the state of the soil. As this is done based on data and electrical systems, no manual labour is needed which reduces the risk of injuries and reduces the time needed when working with agricultural devices.

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
- Fig. 1: illustrates an embodiment of the agricultural device in a working configuration.
- Fig. 2: illustrates displacements of the frames in different working positions.
- Fig. 3: illustrates the first and second frames displaced with no overlap.
- Fig. 4: illustrates a side view of the first and second frames.
- Fig. 5: illustrates a view of the first and second frames with overlap.
- Fig. 6: illustrates a different view of the overlap between the first and second frames.
- Fig. 7: illustrates an embodiment of the agricultural device in a transport configuration.
- Fig. 8: illustrates a view of the first and second frames in a transport configuration.
- Fig. 9: illustrates an embodiment the agricultural device of the transformation between a working position of 36 metres and the transport position.
- Fig. 10: illustrates an embodiment of the agricultural device of the transformation between a working position of 27 metres and the transport position.
- Fig. 11: illustrates a method for varying a width of pumpable medium distribution.
- Fig. 12: illustrates three embodiments of the extendable arm.

### Detailed Description of the Invention

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. it will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

| **No** | **Item** |
|---|---|
| 1 | Vehicle |
| 2 | Direction of travel |
| 3 | Pumpable medium distribution width |
| 4 | Transport length |
| 6 | Working position |
| 7 | Transport position |
| 8 | Tramlines |
| 10 | Agricultural device |
| 11 | Applicators |
| 12 | Trailing shoes |
| 14 | Extendable arm |
| 15 | Extendable arm chamber |
| 16 | Actuator |
| 17 | Actuator mechanism |
| 18 | Gear |
| 19 | Control conduit |
| 20 | Fastening frame |
| 30 | First frame |
| 31 | First axis |
| 40a | Second frame (a) |
| 40b | Second frame (b) |
| 41a | Second axis (a) |
| 41b | Second axis (b) |
| 42 | Overlapping area |
| 60 | Supply hose or pipes |
| 100 | Method |
| 110 | Providing |
| 120 | Adjusting |
| 130 | Setting |
| 150 | determining |
| 160 | Terminating |

Fig. 1 illustrates an embodiment of the agricultural device 10 in a working position 6. The agricultural device 10 comprises a first frame 30, two second frames 40a,40b, which may be connected to a vehicle 1 through a fastening frame 20. The vehicle 1 is driving through tramlines 8 in the field. The first frame 30 is substantially parallel to a first axis 31, where the first axis 31 is substantially perpendicular to the direction of travel 2. When the first frame 30 is in this configuration, then the agricultural device is in the working position 6. Furthermore, the second frames 40a, 40b are arranged substantially parallel to respective second axes 41a, 41b, where the second axes 41a, 41b is arranged substantially perpendicular to the direction of travel 2 and displaced along the direction of travel 2 relative to the first axis 31. In this configuration the second frame 41a, 41b is in its working position. In figure 2 the two second frames 40a, 40b are arranged on the same second axis 41a, 41b, however the two second frames 40a, 40b may not need to be on the same axis perpendicular to the travel direction 2. A supply hose 60 is connected between the vehicle and each of the frames, this hose supplies pumpable medium between the vehicle and possibly a pumpable distribution unit. This unit then distributes the supplied pumpable medium to each of the applicators 11 according to its settings. The total width of the pumpable medium distribution 3 is the width in which the agricultural device is able to distribute the pumpable medium in the working position 6.

In an aspect to Fig. 1, there might be hoses or pipes 60 going from the vehicle 1 to the first frame 30 and second frames 40a,40b. These hoses or pipes 60 may supply pumpable medium into a distribution unit placed on each of the frames. The distribution unit could then distribute the pumpable medium to each of the active applicators 11 on their respective frame according to instructions from a control unit.

Fig. 2 illustrates displacements of the frames in different working positions. The agricultural device 10 according to Fig. 2 comprises a first frame 30 and two second frames 40a,40b and a fastening frame 20. Furthermore, a dotted square 42 highlights overlapping areas where the first 30 and second frames 40a,40b overlap. In Fig. 2.a, there is no overlap between the first 30 and second frames 40a,40b, thereby the agricultural device 10 reaches a maximum pumpable medium distribution width. Fig. 2.b illustrates a slight overlap between the first 30 and second frames 40a,40b. In this configuration applicators on the first 30 or the second frames 40a,40b have been shut off to prevent double distribution of pumpable medium. Fig. 2.c shows an illustration of what could be the maximum overlap between the first 30 and second frames 40a,40b. In this configuration, the agricultural device reaches the minimum pumpable medium distribution width and with an even larger number of overlapping applicators shut off. Fig 2. thus, illustrates clearly the principle of the overlap with different sizes of overlap and how different overlaps effect the pumpable medium distribution width.

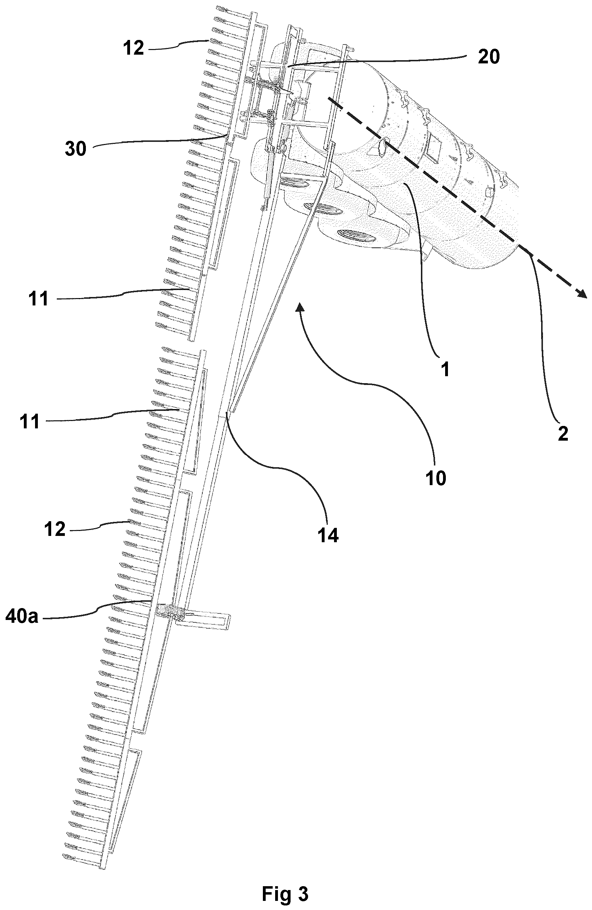

Fig. 3 illustrates the first frame 30 and second frame 40a displaced with no overlap. The agricultural device 10 according to Fig. 3 comprises a first frame 30 and a second frame 40a. The first frame 30 and second frame 40a are attached to the fastening frame 20 through an extendable arm 14. The fastening frame 20 is also connected to a vehicle 1. The first frame 30 and second frame 40a is arranged perpendicular to the direction of travel 2 and are displaced along the direction of travel relative to each other. This way, the first frame 30 and second frame 40a minimize the risk of having the applicators 11 of the two frames colliding. The frames each have a plurality of applicators 11 arranged on the first frame 30 and second frame 40a to distribute the pumpable medium onto or into the soil. The applicators 11 are evenly spaced along the frame. In Fig. 3, the outlet of the applicators 11 are trailing shoes 12, however the applicators 11 are not limited to trailing shoes 12. Fig. 3 showcases a configuration of the agricultural device 10 where there is no overlap between the first frame 30 and the second frame 40a, thereby reaching maximal working width in the working position 6 (not shown in Fig. 3). In use, there will be conduits going from the vehicle 1 to each of the frames, supplying slurry.

The connection of the first frame 30 and second frame 40ato the fastening frame 20 could be achieved with wires or metal supports. The connections could be flexible to some extent. This is illustrated in Fig. 3 where an actuator is connected to the fastening frame 20 and to the extendable arm 14 of the second frame 40a, which is loosely attached to the top of the fastening frame 20. This facilitates a mechanism that can adjust the angle of the second frame 40a according to the topography of the soil that the second frame 40a is in contact with.

In an aspect, the extendable arm 14 may be a telescopic arm. However, the extendable arm 14 could also be a hydraulic excavator arm, crane boom, or other similar examples of extendable arms, or a combination of different types of extendable arms.

In another aspect, Fig. 3 illustrates the use of trailing shoes 12 as the outlet for the applicators 11. However, a hose could just as well be the outlet for the applicators 11.

In one embodiment, the vehicle 1 is a slurry tanker as depicted in Fig. 3. However, the vehicle 1 could just as well be other methods of transporting agricultural devices, such as a tractor, with an internal or external pumpable medium supply. Furthermore, there may be an additional second frame 40a on the opposite side of the fastening frame 20.

The applicators 11 as illustrated in Fig. 3 could be arranged on the first frame 30 and second frame 40a in connection with a spring support for each of the applicators 11. This spring support would increase the stability of the applicators 11 when in use and give the applicators 11 a spring force when in contact with the soil. This spring support will ensure that the applicators 11 are able to dig into the soil to a certain depth for delivering the pumpable medium. Another advantage could be a better local conformity to the topography of the soil with the spring force of the spring support. Furthermore, the ability to better put the pumpable medium into the soil reduces the impact of the medium on the environment.

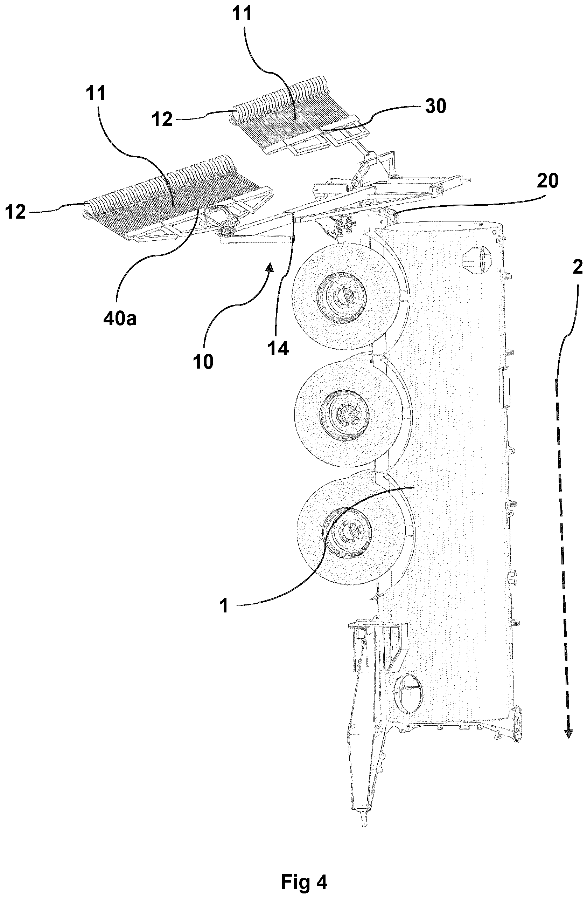

Fig. 4 illustrates a side view of the first 30 and second frame 40a. Fig. 4 discloses a side view of the configuration shown in Fig. 3. From Fig. 4 it is shown that the first frame 30 and the second frame 40a are clearly displaced along the direction of travel 2. The displacement of the first frame 30 and second frame 40a along the direction of travel 2 makes it possible to have an overlap between the first frame 30 and second frame 40a without the applicators 11 colliding. Thus, displacing and overlapping of applicators 11 allows adjustment of the working width 6 (not shown in Fig. 4).

In one aspect, not illustrated in Fig. 4, the applicators 11 could potentially, when shut off by the second controller, be raised from the soil to a elevated position. This would reduce wear on the applicator 11, cause less disturbance of the soil and less friction from dragging the agricultural device.

The vehicle 1, the fastening frame 20, the applicators 11, and the trailing shoes 12 in Fig. 4 are identical to the embodiments with the same reference numbers in Fig. 3 and thus will not be given a detailed description here.

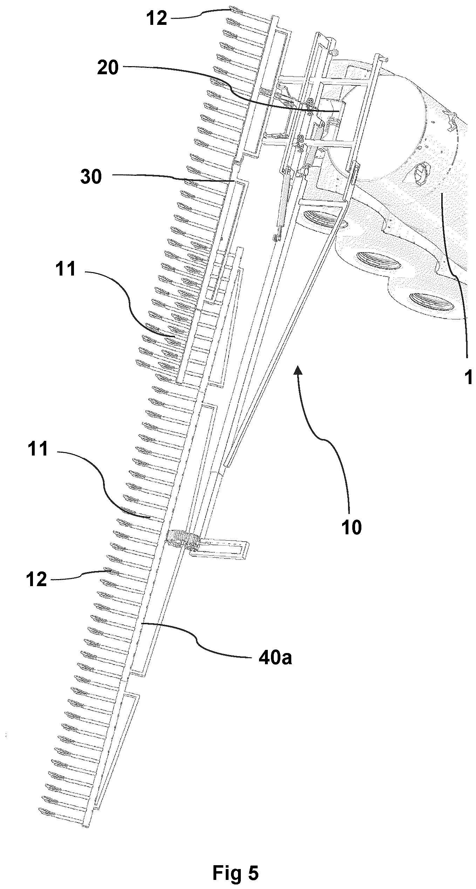

Fig 5. illustrates a view of the first frame 30 and second frame 40a with overlap. The first frame 30 and second frame 40a are in working positions 6 (not shown in Fig. 5) with an overlap between the first frame 30 and the second frame 40a.

In one embodiment of the agricultural device 10, the invention can disable overlapping applicators 11 from the first frame 30 and/or second frame40a,.

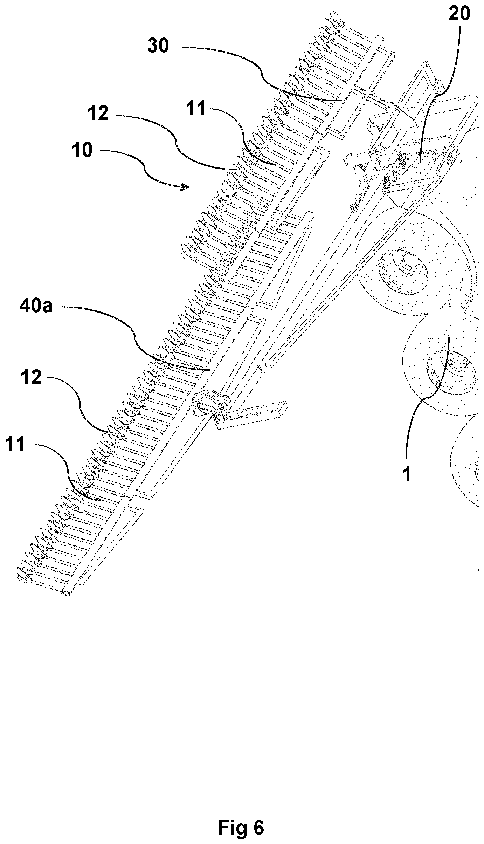

Fig 6. illustrates a different view of the overlap between the first 30 and second frame 40a from the one illustrated in Fig. 5. However, in a position where the distance between the first 30 and second frame 40a are more visible.

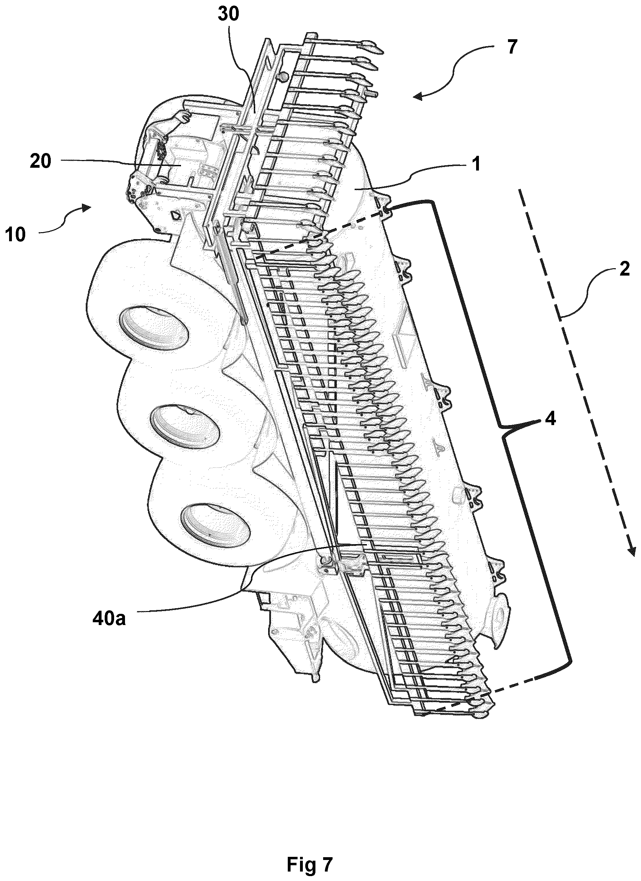

Fig 7. illustrates an embodiment of the agricultural device 10 in a transport configuration. The agricultural device 10 can transform between a working position 6 (not shown in Fig. 7) and a transport position 7, arranged relative to the vehicle 1 with the fastening frame 20 facilitating the connection. In one embodiment, each frame has at least one foldable point on the frame. In the present illustration, two folding points on each frame is shown. The folding of the frames arranges the frames in a plurality of rows around the vehicle 1 when in the transport position 7 as disclosed in Fig. 7. Additionally, during the transformation between the working position 6 (not shown in Fig. 7) and the transport position 7, the applicators 11 are flipped from facing downwards against the soil to be facing upwards. This prevents spilling of the pumpable medium when in transport. Fig. 7 further illustrates that the transport length 4 of the of the second frame is substantially parallel to the direction of travel 2. The length 4 of the second frame 40a in the transport position 7 is usually restricted by national regulations and thus cannot exceed a certain limit and thus needs to be folded.

In one embodiment, the transport position 7 is configured to adhere to national regulations regarding transport on public roads in the country of use.

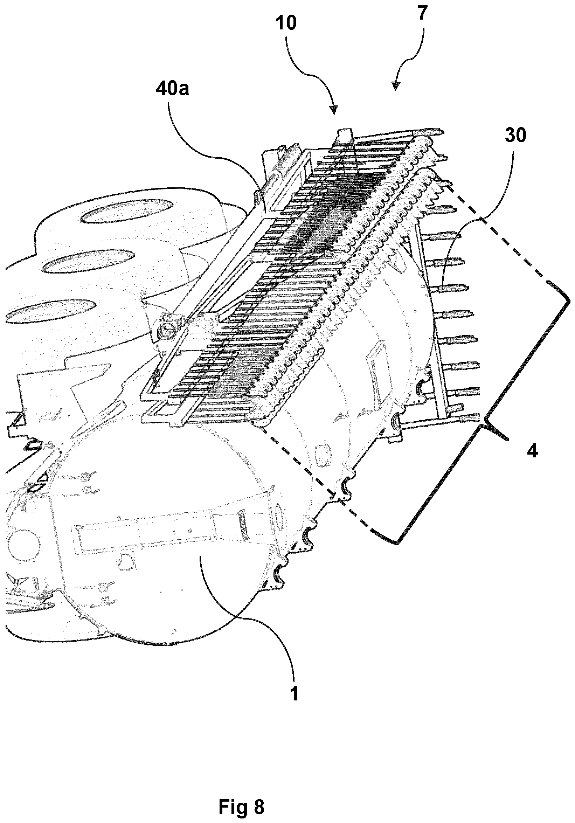

Fig. 8 illustrates a view of the second frame in a transport configuration. This illustrates a different view of what is shown in fig. 7. However, fig. 8 evidently illustrates how the second frame 40a is folded in two rows.

In another embodiment, the second frame may be folded in at least two rows or more. Furthermore, Figs. 7 and 8 show the second frame 40a in its transport position arranged on the side the vehicle 1. However, the second frame 40a could just as well be arranged on top of the vehicle 1 and/or on the side of the vehicle 1.

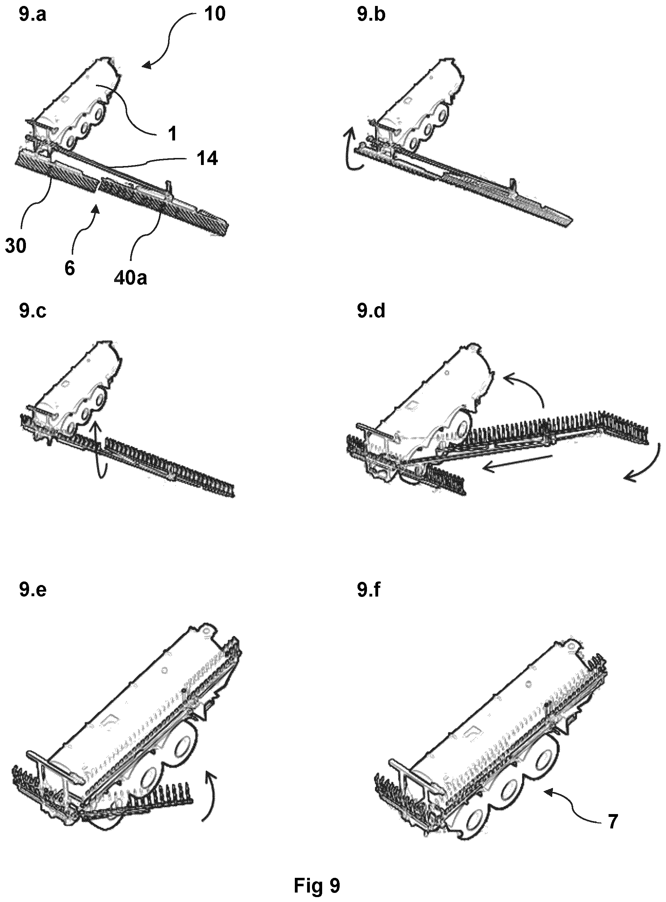

Fig. 9 illustrates an embodiment of the agricultural device 10 in the transformation between a working position 6 of roughly 18 metres and the transport position 7. In Fig. 9.a, the agricultural device 10 is in the working position 6 with a working width of 36 metres. First step of the transformation is illustrated in fig. 9.b, where the first frame 30 and the second frame 40a are lifted. In one aspect, the first frame 30 is lifted first to a higher position than the second frame 40a. In fig. 9.c the first frame 30 and the second frame 40a have been flipped to point towards the sky. In one aspect, the first frame 30 and the second frame 40a have to be finished flipping before the next step can occur. Next, Fig. 9.d illustrates the process of the second frame 40a folding in and aligning with the vehicle 1. The folding of the second frame 40a and alignment of the second frame 40a along with the vehicle 1 may happen simultaneously. In the step an outer section is folded in, to shorten the width of the second frame 40a in the transport position 7. Furthermore, the extendable arm 14 is retracted to a less extended position and the second frame 40a is arranged along the vehicle 1. When the second frame 40a is positioned, an outer folding section of the first frame 30 swings in and overlaps with the second frame 40a as seen in Fig. 9.e. Fig. 9.f shows the agricultural device 10 in the transport position 7.

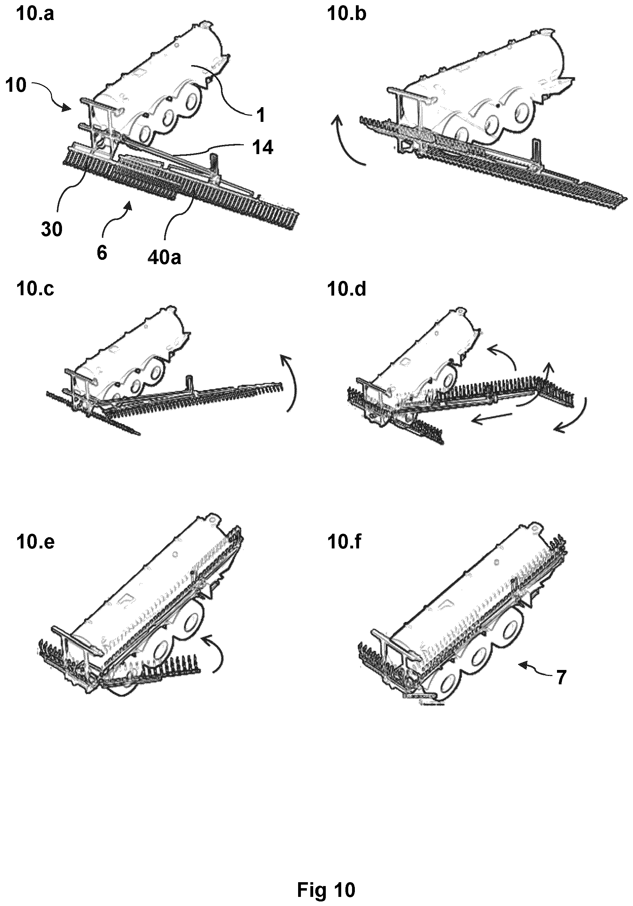

Fig. 10 illustrates an embodiment of the agricultural device 10 of the transformation between a working position 6 of roughly 13.5 metres and the transport position 7. In Fig. 10.a, the agricultural device 10 is in the working position 6 with a working width of 27 metres. In Fig. 10.b, the first frame 30 and the second frame 40a are lifted. The first frame 30 might be lifted higher than the second frame 40a, since the transformation starts at an overlapping position, the second frame 40a cannot fully flip its frame without collision with the first frame 30. In the next step, Fig. 10.c, the second frame 40a swings partly in the direction towards the vehicle 1, while the second frame 40a is only partly lifted. Next, as illustrated in Fig. 10.d, the first frame 30 and the second frame 40a are fully flipped, followed by the process of the second frame 40a folding in and positioning along the vehicle 1. The following may happen simultaneously: The extendable arm 14 may retract to a less extended position, the outer foldable section of the second frame 40a folds in on the second frame 40a to shorten the length in the transport position 7, and the second frame 40a swings in and aligns with the vehicle 1. When the second frame 40a is positioned, an outer foldable section of the first frame 30 swings in and overlaps with the second frame 40a as seen in Fig. 10.e. Fig. 10.f shows the agricultural device 10 in the transport position 7.

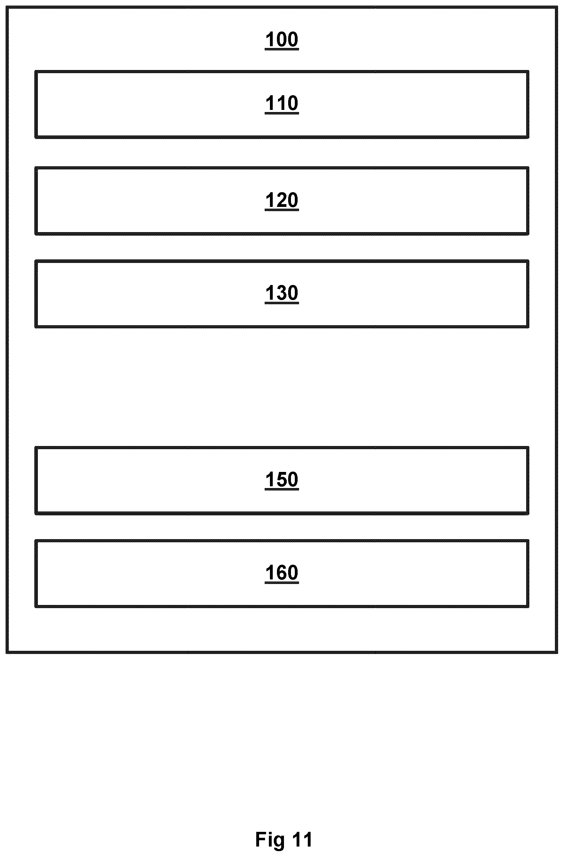

Fig. 11 illustrates a method 100 for varying a width of pumpable medium distribution 3. First step is providing 110 an agricultural device 10 (not shown in Fig. 11) comprising a first frame 30 (not shown in Fig. 11) and at least one second frame 40a,40b (not shown in Fig. 11). Where the first frame 30 (not shown in Fig. 11) is displaced from the at least one second frame 40a,40b relative to a direction of travel 2, the direction of travel 2 being substantially perpendicular to the first frame 30 and the second frame 40a,40b. Next, adjusting 120 a width of the agricultural device (10) by displacing the at least one second frame 40a,40b. Then a setpoint is set 130 for the displacement of the second frame 40a,40b, wherein determining the displacement of the second frame 40a,40b might occur before or after setting 130 the setpoint. Subsequently, adjusting 120 the displacement of the second frame 40a,40b based on the spacing. Followed by determining 150 if one or more applicators 11 arranged on the first frame 30, configured to distribute the pumpable medium to soil are overlapping with one or more applicators 11 arranged on the second frame 40a,40b. Ending with terminating 160 a supply of pumpable medium to the one or more overlapping applicators 11 arranged on the first frame 30 or the second frame 40a,40b.

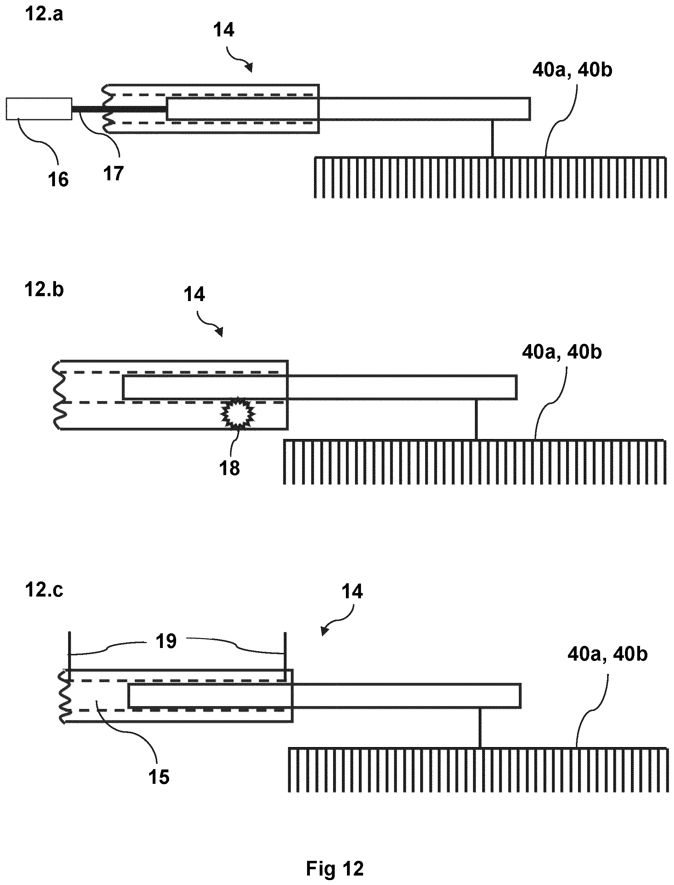

Fig. 12 illustrates three embodiments of the extendable arm 14. All the illustrations comprise an extendable arm 14, wherein the wavy end of the extendable arm 14 represents that it may not be the end of the extendable arm 14. Furthermore, the second frame 40a,40b is arranged at the end of the extendable arm 14 opposite to the wavy end. The first embodiment as illustrated in Fig. 12.a, the displacement of the extendable arm 14 is achieved by a hydraulic or pneumatic system through an actuator 16. A liquid or gas is lead into the actuator 16 which displaces an actuator mechanism 17. Depending on the movement of the actuator mechanism 17, the actuator 16 will then displace the extendable arm 14 laterally..

In Fig 12.b, the displacement of the extendable arm 14 is done by a gear 18 that is able to move the extendable arm 14 back and forth. The extendable arm 14 will have a pattern complementary and in contact with the gear 18. Thus, when the gear 18 rotates, it moves the extendable arm 14. The could for example be a rack and pinion mechanism for displacing the extendable arm 14.

The last embodiment, shown in Fig. 12.c, could be another version of the hydraulic or pneumatic system, where liquid or gas is lead into the extendable arm chamber 15 through control conduits 19. The control conduits 19 are placed near each end of the extendable arm 14. This ensures better control of the extendable arm 14. Adjusting the amount of liquid or gas through the control conduits 19, causes the extendable arm to react by displacing laterally.

## Claims

1. An agricultural device (10) for distributing a pumpable medium, wherein the agricultural device (10) comprises:
- a first frame (30) configured to extend along a first axis (31) in a working position (6);
- at least one second frame (40a,40b) configured to extend along a second axis (41a,41b) in the working position (6); and
- a plurality of applicators (11) configured to distribute the pumpable medium to soil and to be arranged on the first and second frames (30,40a,40b),
wherein the agricultural device (10) is configured to be connected to a vehicle (1) and wherein a direction of travel (2) of the agricultural device (10) is substantially perpendicular to the first and second axes (31,41a,41b),
wherein the first frame (30) is displaced from the at least one second frame (40a,40b) relative to the direction of travel (2) and wherein at least a part of the second frame (40a,40b) extends beyond a span of the first frame (30) along the second axis (41a,41b).

2. The agricultural device (10) according to claim 1, wherein the at least one second frame (40a,40b) is configured to be displaceable along the second axis (41a,41b).

3. The agricultural device (10) according to claim 2, wherein the agricultural device (10) comprises:
- a first sensor system configured to determine the displacement of the second frame (40a,40b); and
- a first controller configured to adjust the displacement of the second frame (40a,40b) based on first sensor data received from the first sensor system.

4. The agricultural device (10) according to claim 2 or 3, wherein the displaceable second frame (40a,40b) is configured to attain a width of pumpable medium distribution (3) in the range of 6 to 13.5 metres, 7.5 to 13.5 metres, 7.5 to 15 metres, 9 to 13.5 metres, 9 to 15 metres, 10.5 to 15 metres, 10.5 to 18 metres, 12 to 18 metres, 13.5 to 18 metres.

5. The agricultural device (10) according to any of claims 2 to 4 wherein the displaceable second frame (40a,40b) is displaced by an extendable arm along the second axis (41a,41b).

6. The agricultural device (10) according to any one of the preceding claims, wherein the agricultural device (10) comprises:
- a second sensor system configured to determine if one or more applicators (11), arranged on the first and second frame (30,40a,40b), are overlapping along the first and/or second axis (31,41a,41b); and
- a second controller configured to shut off distribution of pumpable medium of the one or more overlapping applicators (11) based on second sensor data received from the second sensor system.

7. The agricultural device (10) according to claim 6, wherein the first and/or second frame (30,40a,40b) comprises a lifting mechanism controlled by the second controller and configured to raise the one or more overlapping applicators (11) which are shut off by the second controller.

8. The agricultural device (10) according to any one of the preceding claims, wherein the first frame (30) is configured to be foldable so that a width along the first axis (31) is reduced in a transport position (7) and the second frame (40a,40b) is configured to be pivoted to extend substantially parallel to the direction of travel (2) in a transport position (7), wherein the second frame (40a,40b) is initially pivoted to the transport position (7), and subsequently, the first frame (30) is folded to the transport position.

9. The agricultural device (10) according to claim 8, wherein the second frame (40a,40b) comprises a foldable section configured to be folded in the transport position (7), so that a length (4) of the second frame (40a,40b), substantially parallel to the direction of travel (2), is reduced

10. The agricultural device (10) according to any one of the preceding claims, wherein the plurality of applicators (11) comprises trailing shoes (12) configured to engage with and distribute the pumpable medium to the soil.

11. The agricultural device (10) according to any one of the preceding claims, wherein the agricultural device (10) comprises at least two second frames (40a,40b).

12. A method (100) for varying a width of pumpable medium distribution (3), wherein the method comprises the steps of:
- providing (110) an agricultural device (10) comprising a first frame (30) and at least one second frame (40a,40b), wherein the first frame (30) is displaced from the at least one second frame (40a,40b) relative to a direction of travel (2), the direction of travel (2) being substantially perpendicular to the first frame (30) and second frame (40a,40b);
- adjusting (120) a width of the agricultural device (10) by displacing the at least one second frame (40a,40b).

13. The method according to claim 12, wherein the method comprises further steps of:
- setting (130) a setpoint for the displacement of the second frame (40a,40b)
- adjusting (120) the displacement of the second frame (40a,40b) based on the setpoint.

14. The method according to claim 12 or 13, wherein the method comprises further steps of:
- determining (150) if one or more applicators (11) arranged on the first frame (30), configured to distribute the pumpable medium to soil, are overlapping with one or more applicators (11) arranged on the second frame (40a,40b);
- terminating (160) supply of pumpable medium to the one or more overlapping applicators (11) arranged on the first or second frame (30,40a,40b).
